# EUROPEAN PATENT APPLICATION

(11) **EP 4 414 925 A1**
(43) Date of publication of application: **14.08.2024**
(21) Application number: 23315024.2
(22) Date of filing: 09.02.2023
(51) Int. Cl.: G06Q 30/0601

(54) **MACHINE LEARNING-BASED SOFTWARE ADD-ON FOR PROCESSING ENVIRONMENTAL DATA**

(71) Applicant: IVALUA SAS, 91741 Massy Cedex (FR)
(72) Inventor: Conquet, Patrick, 91741 Massy Cedex (FR); Alazizi, Ayman, 91741 Massy Cedex (FR); Malarde, Arnaud, 91741 Massy Cedex (FR)
(74) Representative: Bryers, Carl

(57) **Abstract**

There is provided a system, a computer readable medium and a method. The system comprises one or more processors; and one or more computer readable media storing computer executable instructions that, when executed, cause the one or more processors to perform operations comprising: providing, as a first input to a first machine learning model, a representation of one or more environmental characteristics relating to a first product; receiving, as an output of the first machine learning model, a grading metric associated with the first product, determining, a ranking associated with the first product based on the associated grading metric relative to other products and respective grading metrics thereof.

## Description

### BACKGROUND

### Field of the Invention

The present application relates to methods, systems and techniques for using a machine learning model as part of a software add-on to process environmental data.

### Description of the Related Technology

As technologies advance, more and more information is being generated by a variety of sources. A large quantity of information is generated in relation to online transactions for buying goods or services from providers. The majority of this information is stored in electronic form, often in databases.

As users become ever more accustomed to conducting online transactions, providers of goods and services may increase the number of goods and services available online to meet the demand of users.

Typical online search engines provide a way for users to identify relevant goods or services by applying appropriate filters to the large number of unfiltered goods and services available online.

It would be advantageous to provide increased flexibility in how goods and services that are relevant to a user may be identified in an efficient way.

### SUMMARY

According to a first aspect, there is provided a system comprising one or more processors and one or more computer readable media storing computer executable instructions that, when executed, cause the one or more processors to perform operations comprising: providing, as a first input to a first machine learning model, a representation of one or more environmental characteristics relating to a first product; receiving, as an output of the first machine learning model, a grading metric associated with the first product, determining, a ranking associated with the first product based on the associated grading metric relative to other products and respective grading metrics thereof.

The use of a machine learning model to take into account an environmental characteristic to provide a grading for a product is a new way of providing product recommendations and enables more sophisticated recommendations to be made that are based on environmental considerations.

In some examples, the operations further comprise: providing, as a second input to the first machine learning model, a vector representation of the first product. In this way, the product vector is separately inputted to the ML model so is not combined with the environmental characteristics.

In some examples, the operations further comprise: providing, as a first input to a second machine learning model, a plurality of characteristics of the first product; and receiving, as a first output of the second machine learning model, the vector representation of the first product.

Advantageously, the product vectors may be prepared offline by an embedding layer prior to the environmental grading by the first machine learning model, which enables the first machine learning model to efficiently provide the grading for the first product.

The plurality of characteristics of the first product may comprise M dimensions and the vector representation of the first product may comprise N dimensions, where N is less than, greater than or equal to M. In this way, characteristics of the first product are completed (for example, further data (associated with more dimensions) relating to the first product may be incorporated into generating the vector representation so that the generated vector representation of the product is accurate, which, in turn, provides more comprehensive data to the first machine learning model on which it bases the grading metric for the first product. Alternatively, where the vector representation contains fewer dimensions than the plurality of characteristics, the first machine learning model has a more streamlined input enabling quicker processing.

In some examples, the operations further comprise: providing, as an additional input to the first machine learning model, a vector representation of a first user. In this way, the output of the first machine learning model can be specific to a particular user, providing a tailored product grading and subsequent ranking.

In some examples, the operations further comprise: prior to the vector representation of the first user being provided as the additional input to the first machine learning model, combining the vector representation of the first user with a vector representation of the first product.

In some examples, the operations further comprise: providing, as a second input to the second machine learning model, a plurality of characteristics of the first user; and receiving, as a second output of the second machine learning model, the vector representation of the first user.

Advantageously, the user vectors may be prepared offline by an embedding layer prior to the environmental grading by the first machine learning model, which enables the first machine learning model to provide an accurate and representative grading metric for the first product.

The plurality of characteristics of the first user may comprise P dimensions and the vector representation of the first user may comprises Q dimensions, where Q is less than, greater than or equal to P.

In this way, characteristics of the first user are completed (for example, further data (associated with more dimensions) relating to the first user may be incorporated into generating the vector representation so that the generated vector representation of the user is more accurate, which, in turn, provides more comprehensive data to the first machine learning model on which it bases the grading metric for the first product. Alternatively, where the vector representation contains fewer dimensions than the plurality of characteristics, the first machine learning model has a more streamlined input enabling quicker processing.

In some examples, the operations further comprise: compiling a list of products based on their associated rankings; and generating a recommendation for one or more products based on list. The generation of a product recommendation based on environmental considerations is a more comprehensive way of recommending products to a user because the data relied upon is from multiple sources.

The one or more environmental characteristics relating to a first product may comprise one or more of the following: a carbon footprint metric associated with the first product; a manufacturing location of the first product; and a transport distance associated with the first product.

In some examples, the operations further comprise: receiving a user query comprising one or more search parameters; and identifying a plurality of products that satisfy the one or more search parameters, wherein the plurality of products comprises the first product. In this way, results of a search performed on the basis of a user query are the basis for input to the first ML model.

According to a second aspect there is provided a method comprising providing, as a first input to a first machine learning model, a representation of one or more environmental characteristics relating to a first product; receiving, as an output of the first machine learning model, a grading metric associated with the first product, determining, a ranking associated with the first product based on the associated grading metric relative to other products and respective grading metrics thereof.

The method may further comprise providing, as a second input to the first machine learning model, a vector representation of the first product.

In some examples, the operations further comprise: providing, as a first input to a second machine learning model, a plurality of characteristics of the first product; and receiving, as a first output of the second machine learning model, the vector representation of the first product.

According to a third aspect there is provided a computer readable media, such as the one described in relation to the aforementioned system, storing computer executable instructions that, when executed, cause the one or more processors to perform operations according to any of the aforementioned method steps.

Further features and advantages of the disclosure will become apparent from the following description of preferred embodiments of the invention, given by way of example only, which is made with reference to the accompanying drawings.

### BRIEF DESCRIPTION OF THE DRAWINGS

Various features of the present disclosure will be apparent from the detailed description which follows, taken in conjunction with the accompanying drawings, which together illustrate, features of the present disclosure, and wherein:
FIG. 1 is a simplified schematic diagram of a computer system, according to an example.
FIG. 2 is a schematic diagram representative of an implementation of the computer system of FIG. 1, according to an example.
FIG. 3 is a flowchart of a method of using a machine learning model, according to an example.
FIG. 4 is a flowchart of a further method of using a machine learning model, according to an example.
FIG. 5 is a schematic diagram of using a machine learning model, according to an example.
FIG. 6 is a schematic diagram of a networked computer system, according to an example.

### DETAILED DESCRIPTION OF CERTAIN EXAMPLES

Generally, online search engines receive a search query from a user and carry out a web search for information that satisfies one or more parameters defined in the search query. In the context of online transactions, a search engine may filter goods or services based on parameters specified in a query submitted by a user. The search engine may identify results of the filtering process and present the results to the user, where the results include the goods or services that satisfy the parameters of the initial query.

Use of an online search engine on its own may have drawbacks in that the search results provided to a user may be limited and/or irrelevant.

The present inventors have identified that combining the aforementioned online search engine and results thereof with a software tool comprising a machine learning model that takes into account comprehensive information from different sources (for example, relating to each search result and relating to the user) provides refined and highly relevant search results to a user query. Moreover, the inventors have identified that environmental characteristics associated with the search results may be taken into account by the machine learning model to provide greater flexibility in how search results may be ranked relative to one another. The software tool may be configurable by a user to define one or more specific environmental characteristics and/or user and product information that are used as the basis for an input to the machine learning model.

Some examples herein described provide a machine learning model that receives as an input a pairing of information relating to a user and information relating to a product listed in search results generated by a search engine. Whilst reference is made to a "product" throughout this disclosure, the term "product" is used to encompass a good and/or a service, or a plurality thereof. The machine learning model can also receive, as an input, environmental characteristics relating to the product in question, where the environmental characteristics may be provided as part of the information relating to the product, as part of the information relating to the user, or may be provided as a separate input. The machine learning model may be trained to determine a grading metric associated with the product and based at least in part on the environmental characteristics to quantify the suitability of the product to the user. The grading metric may be comparable to grading metrics of other products output by the machine learning model so that the products may be ranked relative to one another as part of a recommendation to the user.

The assessment of user information, product information, and environmental characteristics on a per-product and/or per-user basis provides an intelligent and comprehensive recommendation system that provides a single output (a ranking or recommendation) from multiple sources of information. For instance, a user based in a first geographical location (e.g. Europe) may be subject to one or more restrictions relating to the purchase of a product(s) or the product(s) itself that a user based in a second geographical location, different to the first (e.g. outside of Europe), may not be subject to, which would impact the ranking of product results shown to the two users. In this way, ranking of product results for the first user would be more biased by historical and/or training data derived from other users at the same first location, or proximate thereto, than the same data derived from users at the second location.

Moreover, incorporation of environmental characteristics into a determination of a ranking for a product and subsequent recommendation enables a user to make a more informed decision regarding the environmental impact of the product in question, promoting a greener way of conducting online transactions.

A "user" is understood to be an entity or party, for example, an individual person, a company (for example, a supplier, manufacturer, distributor), and any sort of organization or institution.

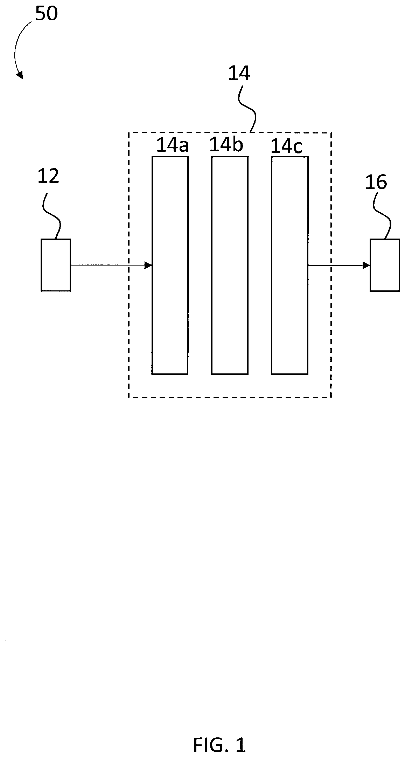

FIG. 1 shows a computer system 50 to which examples described herein have particular applications.

The computer system 50 comprises a machine learning model 14. The machine learning model 14 comprises a neural network having a plurality of network layers including an input layer 14a, one or more intermediate ("hidden") layers 14b, and an output layer 14c. The neural network may be a recurrent neural network (RNN).

The machine learning model 14 is configured to receive an input 12 and generate an output 16 based on the input 12.

The input 12 may be a representation of one or more environmental characteristics relating to a first product. The output 16 may be a grading metric associated with the first product. As an example, the grading metric may be a decimal number between 0 and 1 or an integer number between 0 and 10.

A ranking may be determined that is associated with the first product, based on the associated grading metric, relative to other products and respective grading metrics thereof.

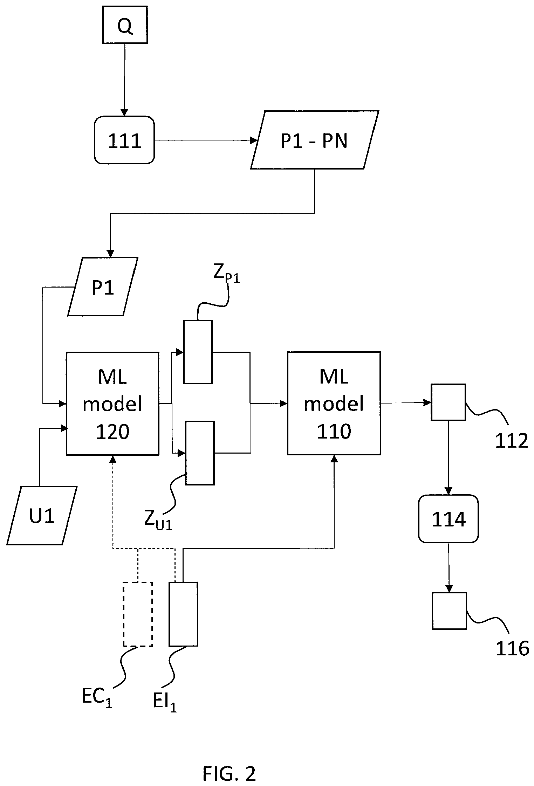

FIG. 2 is a schematic representative of an implementation of the computer 50 system of FIG. 1, according to an example.

A search engine 111 receives a search query Q from a user. The search engine 111 performs a search for products that satisfy parameters of the query Q and identifies a plurality of products P1, P2, P3 ... PN, referred to as P1-PN. In one example, the search engine may identify products within a vector space that are within a certain distance of one or more parameters of the query.

Information relating to a first product P1 of the plurality of products P1-PN is input, as a first input, to a machine learning (ML) model 120. The ML model 120 may be an autoencoder neural network that comprises an embedding layer or another type of transformer-based layer.

The ML model 120 also receives information, U1, relating to the user as another input, also referred to as a second input. The user information U1 may be retrieved from a database, input by the user, or a combination of both.

The ML model 120 is configured to output a first vector Z_{P1} based on the information relating to the first product P1, where the first vector is representative of the information relating to the first product P1. The first vector may be a numerical representation of the information relating to the first product P1. For instance, the ML model 120 may convert the information relating to the first product P1 into numbers (in vector form) for further processing.

The ML model 120 is also configured to output a second vector Z_{U1} based on the information relating to the user, U1, where the second vector Z_{U1} is representative of the information relating to the user, U1. As described in relation to the first vector, the second vector may be a numerical representation of the information relating to the user U1. For instance, the ML model 120 may convert the information relating to the user U1 into numbers (in vector form) for further processing.

The first and second vectors Z_{P1} and Z_{U1} are received as inputs by a second machine learning model, ML model 110. In one example, the first and second vectors Z_{P1} and Z_{U1} may be combined into a single vector prior to being received as inputs by the ML model 110.

Environmental characteristics relating to the first product and/or the first user may be provided as an additional input to the ML model 110. The environmental characteristics may be retrieved from or provided by an external or remote storage source, such as one or more third party databases. Alternatively, the environmental characteristics may be provided or generated by a mathematical model executed by an external or remote processing unit. The environmental characteristics may be represented by an environmental input, for example, a numerical factor EI₁ (depicted in FIG. 2) whereby the subscript 1 indicates that the environmental characteristics relate to the first product P1 and/or the first user U1. The environmental characteristics may comprise one or more of the following: a carbon footprint metric/score associated with the first product; a manufacturing location of the first product or distance therefrom; a main energy source of the manufacturing process for the first product; a certification relating to the manufacture process (for example, this is a green manufacturer); a predicted lifetime for the product (how long the product will exist after it has been created, for example, whether it is biodegradable); a predicted use time for the product (how long the product can be used before it needs replacing); a transport distance associated with the first product; and a grading relating to the "greenness"/carbon footprint of historical purchases made by the user. The carbon footprint score may be based on a carbon footprint associated with a manufacturing process of the product and/or end-of-life management of the product (for example, waste management or recycling processes). The environmental input EI₁ may be a normalized number generated using an algorithm which may take as inputs some of the environmental characteristics and output an integer number. In the example of FIG. 2, the environmental input EI₁ is provided as input to the ML model 110 to give a weighting to the product vector and/or the user vector.

Additionally, or alternatively, the environmental characteristics EC₁ (relating to the first product and/or the first user) or the environmental input EI₁ may firstly be provided as an input to ML model 120 to be used as basis for generating the vector Z_{P1} and/or the vector Z_{U1} for inputting to the ML model 120 (represented by the dashed lines in FIG. 2). Providing the environmental input directly to the ML model 110 as a separate input from the product and user vectors (as described in the previous paragraph) means the ML model 110 gives more weight to the environmental factors associated with the product and/or user compared to incorporating the environmental characteristics into the product and/or user vector via the ML model 120 because the ML model 110 is configured to regard and consider the environmental input as a standalone input.

In any case, the ML model 110 is configured to output a grading metric 112 associated with the first product P1. The ML model 110 corresponds to the machine learning model 14 of FIG. 1.

The grading metric 112 is provided as an input to a ranking engine 114 that is configured to determine a ranking 116 associated with the first product P1 based on the associated grading metric relative to other products of the plurality of products P1-PN and respective grading metrics thereof. The ranking engine 114 may also be configured to compile a list of the products based on their associated rankings and generate a recommendation to the user for one or more of the products based on the list. Whilst the search engine 111 and the ranking engine 114 are depicted as separate components, they may be embodied as distinct functions within the same software program. In addition, in examples, the machine learning models 110 and 120 may be part of the same or different neural networks.

The above described technique may be repeated for each or at least two products of the plurality of products P1-PN so that a grading metric can be obtained for multiple products, which enables the ranking engine to rank the products relative to one another.

The ML models 120 and 110 may be trained using an initial set of training data and a subsequent set of testing data to assess whether the models are performing adequately and to determine when/if further training is required. In particular, the ML model 120 may be trained using a set of training data comprising historical user and product characteristics and, in some examples, respective environmental characteristics, and a set of testing data comprising user and product characteristics and associated environmental characteristics. The user, product and environmental data within the training data set may be sourced from multiple sources, such as, multiple clients each associated with a, possibly distinct, set of users. The training of the ML 120 may be unsupervised. In addition, during the training phase a complete autoencoder operating as part of the ML model 120 may be trained and tested, whereas during an inference phase (use of the trained model) a *part* of the autoencoder, such as one or more of its layers, may be executed, in order to generate the vector representations of the user and product data as outputs, which may comprise fewer dimensions than the input data.

The ML model 110 may be trained using a set of training data comprising historical user and product vectors outputted by the ML model 120 and respective environmental inputs and a set of testing data comprising user and product vectors and associated environmental inputs. Specifically, different pairings of user and product vectors and historical data defining whether the user purchased the respective product may be input to the ML model 110. The user, product, and historical data may be sourced from a single source, such as a single client associated with a particular set of users and/or products, whereby the trained ML model 110 is trained with respect to the single client. The training of the ML model 110 may be supervised. Accordingly, end-to-end training may be implemented with respect to the ML models 120 and 110 since the inputs to the ML model 110 are based on the outputs of the ML model 120. As part of the training, the ML model 110 is trained to output a Yes/No recommendation for the user in relation to the product in question. For example, a "Yes" recommendation may indicate that the product is recommended for the user whereas a "No" recommendation may indicate that the product is not recommended for the user. In one example, the Yes/No recommendation may be a quantitative metric that ranks the product relative to other products to indicate the most recommended product (that is, the most suitable product for the user).

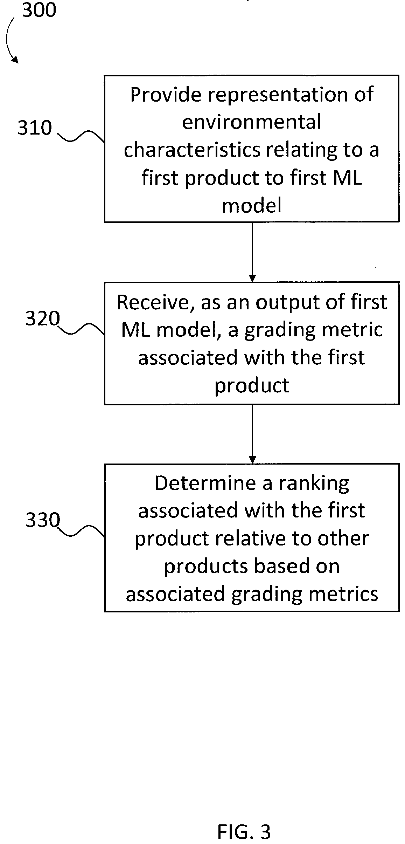

FIG. 3 is a flowchart of a method 300 of using an ML model, according to an example. The method 300 may be implemented in relation to the ML model 120 of FIG. 2.

At step 310, a representation of environmental characteristics relating to a first product is provided to a machine learning model.

At step 320, a grading metric is received as an output of the machine learning model.

At step 330, a ranking associated with the first product relative to other products is determined based on the respective grading metrics of the products. The ranking may be a position of the first product within a list of products to be provided to the user as a response to an initial search query submitted by the user. The list of products may be ordered from a most recommended product (a product that is determined to be most suitable to the user) to a least recommended product (a product that satisfies the users initial query but is determined to be least suitable to the user when compared to and ranked with respect to the other products).

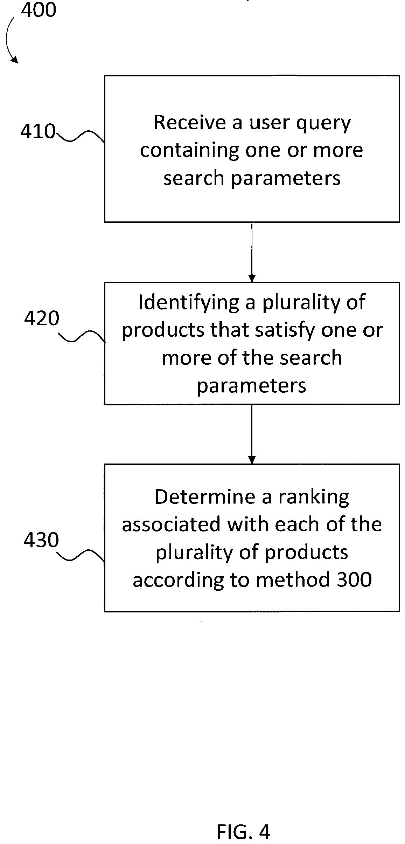

FIG. 4 is a flowchart of a further method 400 of using an ML model, according to an example. The method 400 may be implemented prior to method 300, as described below in relation to step 430 of FIG. 4.

At step 410, a user query containing one or more search parameters is received. As an example, the user query may be received by an online search engine, such as search engine 111 of FIG. 2. The one or more search parameters may define one or more properties of a product that a user would like to identify in relation to an online transaction.

At step 420, a plurality of products that satisfy one or more of the search parameters are identified, for example, the plurality of products comprises the first product P1 described in relation to FIGs 2 and 3. In one example, a search engine may perform steps 410 and 420. For instance, the search engine may set a condition that any products identified as being relevant to the user query must satisfy a predetermined number of the search parameters specified in the user query, such as all of the search parameters, a majority of the search parameters, at least 50% of the search parameters, at least two search parameters, or at least one search parameter. It is understood that the more search parameters that a product satisfies the higher the likelihood that the product is suitable to the user.

At step 430, a ranking associated with each of the plurality of products identified at step 420 is determined according to method 300, described above in relation to FIG. 3.

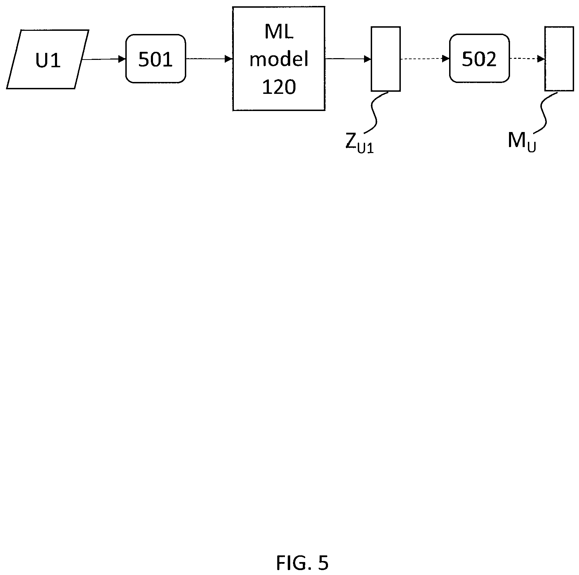

FIG. 5 is a schematic diagram of an example of using an ML model, such as the ML model 120 described in relation to FIG. 2. The use of the ML model 120 described in relation to FIG. 5 may occur prior to the use of the ML model 120 described in relation to FIG. 2.

User information U1 is received by a pre-processing engine 501. The user information may comprise a plurality of characteristics of a user, such as the first user described in relation to FIG. 2. The plurality of characteristics of the user may comprise data relating to preferences of a user in relation to products and historical purchase information relating to the user, for instance, products that the user has purchased in the past and how many times a product has been purchased by the user. The plurality of characteristics of the user may also comprise the domain and the location of the user.

The pre-processing engine 501 may be configured to normalise the user information so that user information relating to different users is comparable, generate a vector representation of the normalised information, and provide the vector representation as an input to the ML model 120.

The ML model 120 is configured to receive the vector representation of the normalised user information and generate a second vector representation of the user information U1, Z_{U1}. The ML model 120 is configured to output the vector Z_{U1}.

In an example, the ML model 120 may be a trained autoencoder configured to update or add additional information to the user information (that is, fill in missing information) to generate updated user information U1 based on training of the autoencoder using historical product and user data. The ML model 120 may be a Long Short-Term Memory autoencoder. The plurality of characteristics of the user in the user information U1 may comprise P dimensions and the vector representation of the first user Z_{U1} may comprise Q dimensions, where Q is less than, greater than, or equal to P. In an example where Q is greater than P, the ML model 120 incorporated additional information to the user information which resulted in an increase in the dimensions of the vector representation of the user information.

Z_{U1} may be input to a correlation engine 502 and the correlation engine 502 may be configured to determine and output a user matrix M_{U} (the optionality of these processes represented by dashed lines within FIG. 5). The user matrix M_{U} may be determined through application of various clustering algorithms to Z_{U1} by the correlation engine 502, for example, K-means clustering. In one example, the matrix Mu may contain columns defining each dimension d1-dn and rows for each user, Ul-Uy, in the following format:

| | d1 | d2 | d3 | ... | dn |
|---|---|---|---|---|---|
| U1 | | | | | |
| U2 | | | | | |
| ... | | | | | |
| Uy | | | | | |

A sub-matrix may be generated based on the matrix Mu, whereby the sub-matrix may be representative of a clustering of a plurality of users, including the first user, according to a predefined characteristic, such as one or more of the dimensions d1-dn.

In one example, the correlation engine may be coded within the same software component as the pre-processing engine 501 but executed as a different function.

Whilst the example of FIG. 5 is described in relation to characteristics of the user, it is also applicable to a plurality of characteristics of a first product and generating a vector representation thereof, whereby the plurality of characteristics of the first product may comprise M dimensions and a vector representation of the first product Z_{P1} may comprise N dimensions, where N is less than, greater than, or equal to M. The plurality of characteristics of the first product may comprise one or more of the following: price; size, colour, lead-time. As described in relation to FIG. 2, in some examples, environmental characteristics, such as carbon footprint score, a transport distance, and a manufacturing location, may be used as the basis for generating the vector representation of the first product. The autoencoder (ML model 120) used to generate the vector relating to the first user may be the same as or different to an autoencoder used to generate a vector relating to the first product.

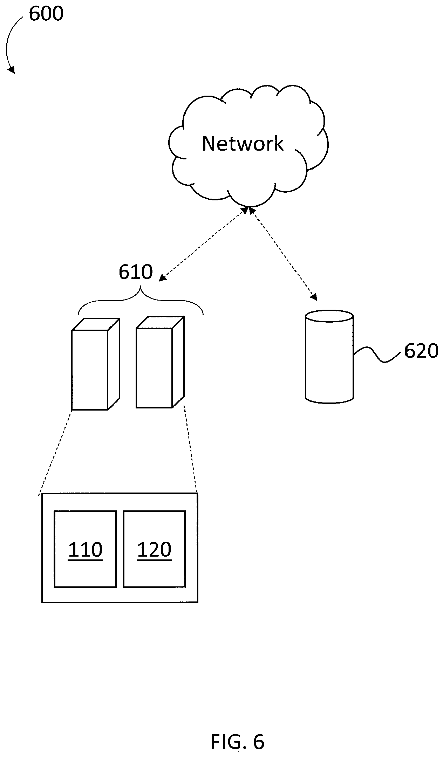

FIG. 6 shows a networked computer system 600. The computer system 600 comprises a server system 610 and a storage system 620. The server system 110 is communicatively coupled to the storage system 620.

The server system 610 is configured to execute the first machine learning model 110 and the second machine learning model 120. The server system 110 comprises at least one processor and at least one computer readable medium. The computer readable medium comprises instructions that are executable by the processor to execute the machine learning models 110 and 120.

The storage system 620 stores a plurality of data records each storing data associated with one or more goods/services and one or more users. The storage system 120 may comprise a plurality of databases that collectively store the plurality of data records.

The server system 110 is used to implement training and inference phases of the machine learning models. For both phases, the server system 110 receives data from the storage system 120.

### Example of practical implementation of the present disclosure

The aforementioned incorporation of environmental characteristics into a product assessment and recommendation process through use of a machine learning model, such as the machine learning model 110, may be coded as a standalone software program available as an add-on tool that can be integrated with other existing software programs or platforms (sometimes referred to as an add-in). In such a scenario, the environmental software program may contain code for integrating its functionality with an existing software platform. For example, the environmental software program may be configured to retrieve environmental characteristics associated with a product and/or a user from a third party database in order to provide those environmental characteristics as an input to its machine learning model and obtain a grading as an output from the model, which is then used to determine a ranking for the product, as described in relation to method 300 of FIG. 3. In addition, the environmental software program may be configured to retrieve user and/or product information from one or more external sources, for example, a database associated with the existing platform to which the environmental software program is an add-on.

In one example, the environmental software program may be hosted by primary server and its functionality queriable via an API (such as a Web API, for instance a REST API)), for example, by third party client software.

In some examples, the environmental software program may be hosted by a primary server in accordance with a Software as a Service model (SaaS) so that a third party can access its functionality (that is, the trained machine learning model) without hosting the program. Alternatively, a third party may download the environmental software program and host the program using its own servers in accordance with a Software as a Product (SaaP) model.

At least some aspects of the embodiments described herein with reference to FIGs 1-6 comprise computer processes performed in processing systems or processors. However, in some examples, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

In the preceding description, for purposes of explanation, numerous specific details of certain examples are set forth. Reference in the specification to "an example" or similar language means that a particular feature, structure, or characteristic described in connection with the example is included in at least that one example, but not necessarily in other examples.

The above examples are to be understood as illustrative. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed.

## Claims

1. A system comprising:
one or more processors; and
one or more computer readable media storing computer executable instructions that, when executed, cause the one or more processors to perform operations comprising:
providing, as a first input to a first machine learning model, a representation of one or more environmental characteristics relating to a first product;
receiving, as an output of the first machine learning model, a grading metric associated with the first product,
determining, a ranking associated with the first product based on the associated grading metric relative to other products and respective grading metrics thereof.

2. The system of any preceding claim, wherein the operations further comprise:
providing, as a second input to the first machine learning model, a vector representation of the first product.

3. The system of claim 2, wherein the operations further comprise:
providing, as a first input to a second machine learning model, a plurality of characteristics of the first product; and
receiving, as a first output of the second machine learning model, the vector representation of the first product.

4. The system of claim 3, wherein the plurality of characteristics of the first product comprise M dimensions and the vector representation of the first product comprises N dimensions, where N is greater than or equal to M.

5. The system of any preceding claim, wherein the operations further comprise:
providing, as an additional input to the first machine learning model, a vector representation of a first user.

6. The system of claim 5 wherein the operations further comprise:
prior to the vector representation of the first user being provided as the additional input to the first machine learning model, combining the vector representation of the first user with a vector representation of the first product.

7. The system of claim 5 or 6, wherein the operations further comprise:
providing, as a second input to the second machine learning model, a plurality of characteristics of the first user; and
receiving, as a second output of the second machine learning model, the vector representation of the first user.

8. The system of claim 7, wherein the plurality of characteristics of the first user comprise P dimensions and the vector representation of the first user comprises Q dimensions, where Q is greater than or equal to P.

9. The system of any preceding claim, wherein the operations further comprise:
compiling a list of products based on their associated rankings; and
generating a recommendation for one or more products based on list.

10. The system of any preceding claim, wherein the one or more environmental characteristics relating to a first product comprise one or more of the following:
a carbon footprint metric associated with the first product;
a manufacturing location of the first product; and
a transport distance associated with the first product.

11. The system of any preceding claim, wherein the operations further comprise:
receiving a user query comprising one or more search parameters; and
identifying a plurality of products that satisfy the one or more search parameters, wherein the plurality of products comprises the first product.

12. A method comprising:
providing, as a first input to a first machine learning model, a representation of one or more environmental characteristics relating to a first product;
receiving, as an output of the first machine learning model, a grading metric associated with the first product,
determining, a ranking associated with the first product based on the associated grading metric relative to other products and respective grading metrics thereof.

13. The method of claim 12, further comprising:
providing, as a second input to the first machine learning model, a vector representation of the first product.

14. The method of claim 13, wherein the operations further comprise:
providing, as a first input to a second machine learning model, a plurality of characteristics of the first product; and
receiving, as a first output of the second machine learning model, the vector representation of the first product.

15. A computer readable media storing computer executable instructions that, when executed, cause the one or more processors to perform operations according to any of method claims 12 to 14.
